(19) Europäisches Patentamt
European Patent Office
Office européen des brevets

(11) **EP 4 140 768 B1**

(12) **EUROPÄISCHE PATENTSCHRIFT**

(45) Veröffentlichungstag und Bekanntmachung des Hinweises auf die Patenterteilung:
**11.12.2024 Patentblatt 2024/50**

(21) Anmeldenummer: **22190392.5**

(22) Anmeldetag: **15.08.2022**

(51) Internationale Patentklassifikation (IPC):
**B60C 9/20** (2006.01)    **D02G 3/48** (2006.01)
**B29D 30/38** (2006.01)   **B60C 1/00** (2006.01)
**B60C 9/00** (2006.01)    B29K 277/00 (2006.01)

(52) Gemeinsame Patentklassifikation (CPC):
**B29D 30/38; B60C 1/0041; B60C 9/0028;**
**B60C 9/0042; B60C 9/005; D02G 3/48;**
B29K 2277/00; B60C 2001/005; B60C 2001/0066;
B60C 2009/0035; D10B 2331/02

(54) **VERFAHREN ZUM HERSTELLEN VON NACHHALTIGEREN VERBUNDMATERIALIEN ZUR VERWENDUNG BEI DER HERSTELLUNG VON FAHRZEUGREIFEN**

METHOD FOR PRODUCING MORE SUSTAINABLE COMPOSITE MATERIALS FOR USE IN THE MANUFACTURE OF VEHICLE TYRES

PROCÉDÉ DE FABRICATION DES MATIÈRES COMPOSITES PLUS DURABLES DESTINÉES À ÊTRE UTILISÉES DANS LA FABRICATION DE PNEUS DE VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2021 DE 102021209234**

(43) Veröffentlichungstag der Anmeldung:
**01.03.2023 Patentblatt 2023/09**

(73) Patentinhaber: **Continental Reifen Deutschland GmbH**
**30175 Hannover (DE)**

(72) Erfinder:
• **Reese, Wolfgang**
**30165 Hannover (DE)**
• **Kramer, Dr. Thomas**
**30165 Hannover (DE)**

(74) Vertreter: **Continental Corporation**
**c/o Continental AG**
**Intellectual Property**
**Postfach 169**
**30001 Hannover (DE)**

(56) Entgegenhaltungen:
EP-A1- 1 757 636            EP-A1- 3 360 697
WO-A1-2012/174451          WO-A1-2014/040804
WO-A1-2019/021747          DE-A1- 102018 209 522
DE-A1- 102018 209 525

**Beschreibung**

Die Erfindung betrifft ein Verfahren zum Herstellen eines Verbundmaterials zur Verwendung bei der Herstellung von Fahrzeugreifen, ein zugehöriges Verfahren zur Herstellung eines Fahrzeugreifens, einen Verstärkungskord für den Einsatz in entsprechenden Verfahren, sowie mit dem Verfahren herstellbare Verbundmaterialien und Fahrzeugreifen, die entsprechende Verstärkungskorde umfassen. Offenbart wird zudem die Verwendung eines entsprechenden Verstärkungskords bzw. Verbundmaterials bei der Herstellung von Fahrzeugreifen.

Der Gegenstand der Erfindung ist in den beigefügten Ansprüchen definiert.

Im Zuge eines zunehmenden Bewusstseins für einen nachhaltigeren Umgang mit den zur Verfügung stehenden Ressourcen besteht auch im Bereich der Herstellung von Fahrzeugreifen ein stetig steigendes Bedürfnis danach, den Herstellungsprozess nachhaltiger und umweltverträglicher zu gestalten. Vor dem Hintergrund einer langfristig unsicheren Verfügbarkeit an fossilen Rohstoffen besteht darüber hinaus ein zunehmendes Bedürfnis danach, neue Rohstoffquellen zu erschließen, um die Versorgungssicherheit mit den zur Herstellung von Fahrzeugreifen benötigten Materialien langfristig sicherzustellen.

WO 2012/174451 A1 offenbart eine Verwertung von Abfallströmen aus industriellen Cycloalkan-Oxidationsprozessen. Ziel ist es dabei, den Monomeranteil im Abfallstrom zu erhöhen bzw. $\alpha,\omega$-difunktionale Alkane bereitzustellen.

DE 102018209522 A1 betrifft einen Verstärkungscord enthaltend zumindest ein Garn, wobei zumindest ein Garn Filamente aus PA PACM 12 enthält, welches aus den Ausgangsstoffen 1,12-Dodecandisäure und Bis(4-Aminocyclohexyl)methan hergestellt ist und wobei zumindest die 1,12-Dodecandisäure aus nachwachsenden Rohstoffen hergestellt ist.

WO 2014/040804 A1 betrifft einen Verstärkungscord für elastomere Erzeugnisse, insbesondere für einen Fahrzeugluftreifen, bestehend aus wenigstens einem Garn, wobei dass wenigstens eine Garn aus Polyethylenfuranat (PEF) besteht, wobei das PEF vollständig oder zumindest teilweise aus Biomassen und/oder nachwachsenden Rohstoffen hergestellt ist.

EP 1 757 636 A1 betrifft ein Polyamidharz und insbesondere ein Polyamidharz, das eine Adipinsäureeinheit, eine Pentamethylendiamineinheit und eine Hexamethylendiamineinheit als konstituierende Bestandteile davon umfasst und unter Verwendung von Rohmaterialien hergestellt werden kann, die frei von der Bildung von Kohlendioxid sind.

Die vorliegende Erfindung betrifft den Bereich der sogenannten Verstärkungskorde und die daraus hergestellten Verbundmaterialien. Diese Verstärkungskorde werden bei der Herstellung moderner Fahrzeugreifen, insbesondere von Fahrzeugluftreifen, als Festigkeitsträger eingesetzt. Hierfür werden entsprechende Verstärkungskorde zumeist in eine vulkanisierbare Kautschukmischung eingebettet, um hierdurch ein vulkanisierbares Verbundmaterial zu erhalten.

Die unterschiedlichen Bestandteile eines modernen Fahrzeugluftreifens werden dabei zumeist aus verschiedenen Verbundmaterialien gefertigt, die sich beispielsweise hinsichtlich der eingesetzten vulkanisierbaren Kautschukmischung und/oder der Art, Anzahl und Positionierung der eingesetzten Verstärkungskorde unterscheiden können, wobei der jeweilige Aufbau an die spezifischen Anforderungen der jeweiligen Reifenbauteile und Lagen angepasst wird. Typische Einsatzorte für solche vulkanisierbaren Verbundmaterialien sind dabei beispielsweise die Karkasslagen, Wulstverstärker, Gürtelbandagen oder der Gürtel. Nach dem Vulkanisieren dieser Verbundmaterialien bzw. der die Verbundmaterialien enthaltenen Rohlinge werden vulkanisierte Verbundmaterialien erhalten, in denen die Verstärkungskorde in die vulkanisierte Kautschukmischung eingebettet sind.

Verstärkungskorde sind dem Fachmann grundsätzlich bekannt und bestehen regelmäßig aus einem oder mehreren miteinander verdrehten Garnen. Hierbei sind auch sogenannte Hybridkorde, beispielsweise Duplex- oder Triplexkorde bekannt, bei denen mehrere Garne, beispielsweise aus unterschiedlichen Materialien, miteinander endverdreht werden.

Die in den Verstärkungskorden eingesetzten Materialien werden dabei zumeist nach ihren physikalisch-chemischen Eigenschaften und im Lichte des jeweiligen Anforderungsprofils ausgewählt. Unter den regelmäßig in Verstärkungskorden eingesetzten Materialien kommt dabei den Polyamiden, d. h. den Kondensationsprodukten aus einer Polycarbonsäure, beispielsweise einer Dicarbonsäure, und eines Polyamins, beispielsweise eines Diamins, eine besondere Bedeutung zu. Polyamide, insbesondere aliphatische Polyamide, sind dabei für viele Anwendungen wegen ihrer vorteilhaften physikalisch-chemischen Eigenschaften ein wesentlicher Bestandteil zahlreicher Verstärkungskorde. Die im Stand der Technik eingesetzten Verstärkungskorde umfassen dabei regelmäßig Polyamidgarne, welche petrochemisch hergestellt wurden, d. h. bei denen es sich um erdölbasierte Materialien handelt.

Um die Nachhaltigkeit der Fertigung entsprechender Verbundmaterialien zu steigern und die Abhängigkeit von fossilen Rohstoffen zu reduzieren, wurden im Stand der Technik Versuche unternommen, die petrochemisch hergestellten Garne durch Naturfasern zu ersetzen. Dies wird jedoch mit Blick auf die Qualität und die Reproduzierbarkeit der damit herstellbaren Verbundmaterialien regelmäßig als nachteilig empfunden, insbesondere, weil Naturfasern in vielen Fällen nicht die notwendigen physikalisch-chemischen Eigenschaften aufweisen, beispielsweise hinsichtlich des Schrumpfverhaltens. Zudem weisen einige Naturfasern weitere Eigenschaften auf, die sie für den Einsatz in Verbundmaterialien in Fahrzeugluftreifen weniger geeignet machen, wobei beispielsweise die bekannte Feuchtigkeitsempfindlichkeit des Materials Rayon genannt werden kann. Darüber hinaus sind Naturfasern regelmäßig lediglich als Stapelfaser und nicht als Endlosfaser verfügbar.

Es war die primäre Aufgabe der vorliegenden Erfindung, die vorstehend beschriebenen Nachteile des Standes der Technik auszuräumen oder zumindest zu verringern.

Insoweit war es die Aufgabe der vorliegenden Erfindung, ein Verfahren zur Herstellung eines Verbundmaterials anzugeben, welches in nachhaltigerer Weise betrieben werden kann und das die Abhängigkeit von fossilen Rohstoffen reduziert.

Hierbei war es eine Aufgabe, dass mit dem anzugebenden Verfahren Verbundmaterialien für die Herstellung von Fahrzeugluftreifen erhalten werden sollten, die trotz einer hohen Nachhaltigkeit über ausgezeichnete Eigenschaften verfügen und mit denen leistungsfähige Fahrzeugluftreifen hergestellt werden können.

Darüber hinaus war es eine Aufgabe der vorliegenden Erfindung, dass mit dem anzugebenden Verfahren Verbundmaterialien in reproduzierbarer Weise herstellbar sein sollten, sodass die hohe Qualität der hergestellten Verbundmaterialien kontinuierlich gewährleistet werden kann.

Hierbei war es wünschenswert, dass das anzugebende Verfahren zur Herstellung von Verbundmaterialien hinsichtlich der eingesetzten Ausgangsmaterialien möglichst flexibel sein sollte, um eine größtmögliche Versorgungssicherheit hinsichtlich der Rohstoffe zu gewährleisten. Darüber hinaus war es eine Aufgabe der vorliegenden Erfindung, dass das anzugebende Verfahren zur Herstellung eines Verbundmaterials eine flexible und spezifische Einstellung der physikalisch-chemischen Eigenschaften des Verbundmaterials und der daraus zu erhaltenen Vulkanisate ermöglichen sollte, durch die die entsprechenden Verbundmaterialien trotz einer hohen Nachhaltigkeit zielgenau an die Erfordernisse verschiedene Anwendungen angepasst werden können.

Hierbei war es eine Maßgabe, dass das anzugebende Verfahren zum Herstellen eines Verbundmaterials idealerweise in einem großtechnischen Maßstab einsetzbar sein sollte, welcher eine zeit- und kosteneffiziente Fahrzeugreifenfertigung ermöglicht.

In diesem Zusammenhang war es eine weitere Aufgabe der vorliegenden Erfindung, ein Verfahren zur Herstellung von Fahrzeugreifen anzugeben, welches auf dem anzugebenden Verfahren zur Herstellung von Verbundmaterialien aufbaut und dadurch eine besonders ressourcenschonende Fertigung von Fahrzeugreifen ermöglicht, die dabei über eine gleichbleibende hohe Qualität verfügen sollten.

Insoweit war es eine ergänzende Aufgabe der vorliegenden Erfindung, einen Verstärkungskord anzugeben, welcher in dem erfindungsgemäßen Verfahren zur Herstellung von Verbundmaterialien eingesetzt werden kann. Dabei war es wünschenswert, dass der anzugebende Verstärkungskord ressourcenschonender herstellbar sein sollte, jedoch hinsichtlich der physikalisch-chemischen Eigenschaften nicht oder nur unwesentlich nachteiliger sein sollte, als vergleichbare petrochemisch hergestellte Verstärkungskorde.

Ausgehend von den vorstehenden Aufgaben war es eine zusätzliche Aufgabe ein Verbundmaterial anzugeben, welches mit dem anzugebenden Verfahren herstellbar ist und zudem den anzugebenden Verstärkungskord umfasst.

Ebenso war es eine Aufgabe der vorliegenden Erfindung, einen Fahrzeugreifen anzugeben, welcher ein entsprechendes Verbundmaterial bzw. entsprechende Verstärkungskorde umfasst und dadurch besonders nachhaltig produziert werden kann.

Die Erfinder der vorliegenden Erfindung haben nunmehr herausgefunden, dass die vorstehend genannten Aufgaben überraschenderweise gelöst werden können, wenn bei der Herstellung von Verbundmaterialien für die Verwendung bei der Herstellung von Fahrzeugreifen ein biobasiertes Polyamidgarn eingesetzt wird, welches aus der großen Zahl an möglichen Polyamiden eines von zwei spezifischen biobasierten Polyamiden umfasst, welche aus ausgewählten Ausgangsmonomeren hergestellt werden, wenn diese Ausgangsmonomere zumindest teilweise aus Biomasse hergestellt werden. Hierdurch ist es möglich, die Abhängigkeit von fossilen Rohstoffen, insbesondere von Erdöl, signifikant zu reduzieren und eine besonders wichtige Komponente für die Fertigung von Fahrzeugreifen durch ein nachhaltiges Verfahren herzustellen, welches in besonders umweltfreundlichen Produkten resultiert.

Bedingt durch die hohen Anforderungen an die physikalisch-chemischen Eigenschaften von in Verstärkungskorden eingesetzten Materialien ist diese Erkenntnis überraschend, da nicht abzusehen war, dass mit entsprechenden Verfahren hergestellte Verbundmaterialien tatsächlich für den Einsatz in modernen Fahrzeugreifen geeignet sein könnten und dabei auch noch über ausgezeichnete Eigenschaften verfügen, die mit denen von petrochemisch hergestellten Verstärkungskorden ausgerüsteten Verbundmaterialien vergleichbar sind. Dies liegt unter anderem daran, dass die Herstellung von aus Biomasse gewonnenen Ausgangsmonomeren regelmäßig mit großen chemischen und verfahrenstechnischen Herausforderungen verbunden ist, wobei insbesondere an die Aufbereitung der entsprechenden Materialien und an die notwendigen Reinheitsgrade hohe Anforderungen gestellt werden, die ausgehend von Biomassen zumeist schwer zu erreichen sind. Entsprechend weisen Ausgangszusammensetzungen für die Polymerisation von Polymeren, deren Ausgangsmonomere aus Biomasse hergestellt sind, zum Teil Verunreinigungen und/oder Nebenprodukte der vorausgegangenen Umsetzung der Biomasse auf, die bei vergleichbaren Monomeren aus petrochemischen Prozessen nicht vorliegen und die die physikalisch-chemischen Eigenschaften der daraus herstellbaren Polymere nachteilig beeinflussen können, was für sicherheitstechnisch hoch sensible Produkte wie Fahrzeugreifen regelmäßig als problematisch angesehen wird.

Nach Einschätzung der Erfinder der vorliegenden Erfindung ist es mit Blick auf die Nutzung von Polyamiden jedoch für zwei spezifische Arten bzw. Kombinationen von Ausgangsmonomeren trotz dieser Vorbehalte des Fachmanns möglich, zuverlässig und reproduzierbar Verstärkungskorde mit ausgezeichneten Eigenschaften zu erhalten, die in Verbundmaterialien eingesetzt werden können, um damit reproduzierbar leistungsfähige Fahrzeugreifen zu fertigen. Die Erfinder sind dabei zu der Einschätzung gelangt, dass die Abweichungen im physikalisch-chemischen Verhalten der aus den biobasierten Aufgangsmonomeren hergestellten Polyamide in diesen Fällen überraschenderweise unbeachtlich sind, und/oder sich die Unterschiede insbesondere in Bereichen zeigen, die für die Anwendung der erfindungsgemäßen Verbundmaterialien in Fahrzeugreifen wenig relevant sind.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verstärkungskorde, Verbundmaterialien, Fahrzeugreifen und Verwendungen ergeben sich aus den Merkmalen bevorzugter Verfahren.

Die Erfindung betrifft ein Verfahren zum Herstellen eines Verbundmaterials zur Verwendung bei der Herstellung von Fahrzeugreifen, umfassend die folgenden Verfahrensschritte:

a) Herstellen oder Bereitstellen einer Ausgangszusammensetzung umfassend als Ausgangsmonomere:

i) ε-Aminocapronsäure und/oder ε-Caprolactam,
und/oder

ii) Hexamethylendiamin und Hexamethylendicarbonsäure,

wobei die in der Ausgangszusammensetzung enthaltenen Ausgangsmonomere zumindest teilweise aus Biomasse hergestellt werden, bezogen auf die Stoffmenge der in der Ausgangszusammensetzung enthaltenen Ausgangsmonomere,

b) Polymerisieren der in der Ausgangszusammensetzung enthaltenen Ausgangsmonomere zu einem biobasierten Polyamid, Formen des biobasierten Polyamids zu einem biobasierten Polyamidgarn, und Verarbeiten des biobasierten Polyamidgarns zu einem Verstärkungskord, und

c) Einbetten des Verstärkungskords in eine vulkanisierbare Kautschukmischung zum Erhalt des Verbundmaterials.

Mit dem erfindungsgemäßen Verfahren werden Verbundmaterialien, insbesondere unvulkanisierte Verbundmaterialien, hergestellt, welche anschließend bei der Herstellung von Fahrzeugreifen verwendet werden können, bspw. als Gürtelbandagen. Hierfür wird eine Ausgangszusammensetzung bereitgestellt, die spezifische Ausgangsmonomere umfasst. Bei diesen Ausgangsmonomeren kann es sich um ε-Aminocapronsäure und/oder ε-Caprolactam sowie zusätzlich oder alternativ um die Kombination der beiden Monomere Hexamethylendiamin und Hexamethylendicarbonsäure handeln.

In Übereinstimmung mit dem fachmännischen Verständnis werden durch die Umsetzung einer Ausgangszusammensetzung, die die Ausgangsmonomere gemäß i) und/oder gemäß ii) umfasst, unterschiedliche Polyamide erhalten, wobei es prinzipiell auch möglich ist, unter Verwendung beider Gruppen i) und ii) Copolymere herzustellen. In Übereinstimmung mit dem fachmännischen Verständnis umfasst die Ausgangszusammensetzung die Ausgangsmonomere der jeweiligen Typen in einer gewissen Menge, sodass in der Ausgangszusammensetzung jedes Ausgangsmonomer mit einer bestimmten Stoffmenge vorliegt.

Für die Erfindung wesentlich ist nunmehr, dass die in der Ausgangszusammensetzung enthaltenen Ausgangsmonomere zumindest teilweise aus Biomasse hergestellt werden. Hierbei bezieht sich diese Angabe auf die Stoffmenge der in der Ausgangszusammensetzung enthaltenen Ausgangsmonomere, was bedeutet, dass zumindest ein Teil der Stoffmenge an Ausgangsmonomeren aus Biomasse hergestellt wird.

In Übereinstimmung mit dem fachmännischen Verständnis wird ein einzelnes Molekül eines Ausgangsmonomers dann als aus Biomasse hergestellt angesehen, wenn bei seiner Herstellung Biomasse als Ausgangsmaterial verwendet wurde. Auch wenn es explizit bevorzugt ist, dass ein aus Biomasse hergestelltes Molekül der Ausgangsmonomere vollständig aus Biomasse hergestellt ist, d. h. ohne den Einsatz von nicht aus Biomasse stammenden Chemikalien, ist für den Fachmann verständlich, dass dies keine Voraussetzung dafür ist, dass ein Ausgangsmonomer als aus Biomasse hergestellt angesehen wird. So kann beispielsweise eine aus Biomasse hergestellte Grundchemikalie, beispielsweise 5-(Hydroxymethyl)furfural, zur Herstellung der vorstehend angegebenen Ausgangsmonomeren mit weiteren Substanzen umgesetzt werden, welche nicht zwangsläufig selbst aus Biomasse hergestellt sein müssen, um dennoch als ein Molekül angesehen zu werden, welches aus Biomasse hergestellt wurde.

Zusammenfassend ist im Sinne der vorliegenden Erfindung ein einzelnes Molekül eines Ausgangsmonomers somit dann aus Biomasse hergestellt, wenn es mittelbar oder unmittelbar aus Biomasse bzw. deren Umsetzung erhalten wurde, wobei die erfindungsgemäß einzusetzende Ausgangszusammensetzung spezifische Ausgangsmonomere umfasst, von denen bezogen auf die Stoffmenge der Ausgangsmonomere in der Ausgangszusammensetzung zumindest ein Teil der Moleküle entsprechend in dieser Form aus Biomasse hergestellt sein muss.

Die Ausgangszusammensetzung kann neben den Ausgangsmonomeren weitere Monomere enthalten, beispielsweise zur Erzeugung von Copolymeren, wobei darüber hinaus beispielsweise auch übliche Additive oder Polymerisationssysteme vorgesehen werden können.

Im Fall der Gruppe ii) kann die Ausgangszusammensetzung zudem bereits das Reaktionsprodukt Hexamethylendiaminadipat (sogenanntes "AH-Salz") enthalten, welches ein Reaktionsprodukt von Hexamethylendiamin und Hexamethylendicarbonsäure darstellt, wobei entsprechende Zwischenprodukte bei der Bestimmung des Gehalts an Ausgangsmonomeren in der Ausgangszusammensetzung anteilig berücksichtigt werden. In Übereinstimmung mit dem fachmännischen Verständnis ist es insoweit auch möglich und für mache Anwendungen sogar bevorzugt, dass aus der Ausgangszusammensetzung und den Ausgangsmonomeren zunächst Zwischenprodukte hergestellt werden, bspw. Hexamethylendiaminadipat, die anschließend polymerisiert werden, so dass im Rahmen der vorliegenden Erfindung auch das Polymerisieren von Zwischenprodukten ein Polymerisieren der in den Zwischenprodukten enthaltenen Ausgangsmonomeren darstellt.

In Schritt b) des erfindungsgemäßen Verfahrens erfolgt das Polymerisieren der in der Ausgangszusammensetzung enthaltenen Ausgangsmonomere, d.h. die Herstellung eines Polymers aus den Ausgangsmonomeren. Bedingt durch den Umstand, dass die Ausgangsmonomere zumindest teilweise aus Biomasse hergestellt werden, wird hierdurch ein biobasiertes Polyamid erhalten. Dieses biobasierte Polyamid wird anschließend zu einem biobasierten Polyamidgarn verarbeitet, was effizienter Weise durch ein Schmelzspinnverfahren erfolgen kann. Bevorzugt ist insoweit zunächst ein erfindungsgemäßes Verfahren, wobei das Formen des biobasierten Polyamidgarns mittels eines Extruders erfolgt. Bevorzugt ist vor diesem Hintergrund auch ein erfindungsgemäßes Verfahren, wobei das biobasierte Polyamidgarn durch ein Spinnverfahren, bevorzugt ein Schmelzspinnverfahren, hergestellt wird.

Aus diesem biobasierten Polyamidgarn, welches das biobasierte Polyamid umfasst, welches aus den zumindest teilweise aus Biomasse hergestellten Ausgangsmonomeren erzeugt wird, wird ein Verstärkungskord gefertigt, beispielsweise durch das Verdrehen von zwei oder mehr solcher biobasierten Polyamidgarne.

Der so erhaltene Verstärkungskord wird in eine vulkanisierbare Kautschukmischung eingebettet, um ein vulkanisierbares Verbundmaterial zu erhalten, welches anschließend in der Herstellung von Fahrzeugreifen verwendet werden kann.

Wie vorstehend erläutert, kann die einzusetzende Ausgangszusammensetzung und die darin enthaltenen Ausgangsmonomere hergestellt oder bereitgestellt werden. Die Herstellung der angegebenen Ausgangsmonomere aus Biomasse ist im Stand der Technik grundsätzlich ebenso bekannt wie das Erhalten von Polyamiden durch Polymerisation der entsprechenden Ausgangsmonomere. Insoweit kann der Fachmann auf aus dem Stand der Technik bekannte Verfahren zurückgreifen, wie sie beispielsweise in der US 9783473 B2, US 9982094 B2, US 9988491 B2, US 10081612 B2, CN 104277021, US 4400468, US 8927768 B2 oder US 9199961 B2 sowie den darin zitierten Dokumenten offenbart sind. Zur Herstellung der erfindungsgemäß einzusetzenden Ausgangsmonomere bzw. deren Polymerisation greift der Fachmann somit in Abhängigkeit von herzustellenden Ausgangsmonomer und der eingesetzten Biomasse auf das passende Verfahren zurück.

Für die weit überwiegende Anzahl von Betrieben aus dem Bereich der Reifenfertigung, die regelmäßig nicht über großtechnische Anlagen zur Herstellung von Ausgangsmonomeren verfügen, wird es in der Praxis zielführend sein, die entsprechenden Ausgangsmonomere, welche zumindest teilweise aus Biomasse hergestellt wurden, von darauf spezialisierten Zulieferern zu erwerben und sie im erfindungsgemäßen Verfahren bereitzustellen.

Sofern der Fachmann im Bereich der Reifenfertigung keinen eigenen Zugang zu Anlagen für die Polymerisation der entsprechenden Ausgangsmaterialien zur Verfügung hat, kann die Polymerisation beispielsweise bei einem auf die Herstellung von Polymeren spezialisierten Lohnfertiger erfolgen, für den die Umsetzung entsprechender Ausgangsmonomere zu Polyamiden im Lichte des Standes der Technik regelmäßig keine Probleme bereiten wird.

Das biobasierte Polyamid und das daraus erhaltene biobasierte Polyamidgarn werden im erfindungsgemäßen Verfahren zu einem Verstärkungskord verarbeitet, wobei grundsätzlich die Verfahren und Methoden zum Einsatz kommen können, die auch bei der Verarbeitung von petrochemisch hergestellten Polyamidgarnen eingesetzt werden können, was mit Blick auf die leichte Implementation des Verfahrens in der Fertigung als großer Vorteil des erfindungsgemäßen Verfahrens gesehen werden kann.

Die Feststellung, ob ein Verbundmaterial mit dem erfindungsgemäßen Verfahren hergestellt wurde und entsprechend ausgestaltete Verstärkungskorde aufweist, ist vorteilhafterweise zwanglos durch Anwendung der ASTM D 6866 aus 2021 möglich, welche die sog. C-14-Methode betrifft und den Titel "standard test method for determining the biobased content of solid, liquid and gaseous samples using radiocarbon analysis" trägt. Solche Ausgangsmonomere, die aus Biomasse hergestellt werden, weisen nämlich, ebenso wie die daraus erhaltenen biobasierten Polyamide und das darauf hergestellte Polyamidgarn einen deutlich höheren Anteil an $^{14}$C im Kohlenstoff auf, als petrochemisch, d. h. aus Erdöl, hergestellte Materialien.

Auch wenn es mit dem erfindungsgemäßen Verfahren möglich ist, zwei verschieden Gruppen der Ausgangsmonomere einzusetzen und zudem die Möglichkeit der Ausformung von Co-Polymeren besteht, ist es nach Einschätzung der Erfinder bevorzugt, jeweils lediglich eine der vorstehend angegebenen Gruppen i) oder ii) der Ausgangsmonomere einzusetzen, wobei für das Hexamethylendiamin bzw. die Hexamethylendicarbonsäure besonders geeignete spezifische Ausgangsmonomere identifiziert werden konnten. Bevorzugt ist somit ein erfindungsgemäßes Verfahren, wobei die Ausgangszusammensetzung die Ausgangsmonomere $\varepsilon$-Aminocapronsäure und/oder $\varepsilon$-Caprolactam, bevorzugt $\varepsilon$-Caprolactam, umfasst, wobei die Ausgangszusammensetzung bevorzugt im Wesentlichen aus diesen Ausgangsmonomeren besteht. Bevorzugt ist auch ein erfindungsgemäßes Verfahren, wobei die Ausgangszusammensetzung die Ausgangsmonomere Hexamethylendiamin und Hexamethylendicarbonsäure umfasst, wobei die Ausgangszusammensetzung bevorzugt im Wesentlichen aus diesen Ausgangsmonomeren besteht. Bevorzugt ist ebenfalls ein erfindungsgemäßes Verfahren, wobei das Hexamethylendiamin 1,6-Diaminohexan ist und/oder wobei die Hexamethylendicarbonsäure 1,6-Hexandisäure ist.

Auch wenn das erfindungsgemäße Verfahren grundsätzlich nicht dahingehend beschränkt ist, wie die Ausgangsmonomere aus der Biomasse hergestellt werden sollen, ist es nach Einschätzung der Erfinder besonders vorteilhaft, wenn die Syntheseroute über 5-(Hydroxymethyl)furfural (5-HMF) erfolgt, welches vorteilhafterweise besonders effizient und im großen Maßstab aus Biomasse hergestellt werden kann, insbesondere aus Getreidepflanzen, bspw. aus Maissirup mit hohem Fructosegehalt (sog. "high-fructose corn syrup"). Durch Umsetzung von 5-HMF lassen sich vorteilhafterweise sämtliche der vorstehend angegebenen Ausgangsmonomere herstellen, sodass das erfindungsgemäße Verfahren bei Verwendung von 5-(Hydroxymethyl)furfural besonders effizient betrieben werden kann, da die Herstellung der Ausgangsmaterialien durch eine teilweise überschneidende Syntheseroute vereinfacht ist. Bevorzugt ist somit ein erfindungsgemäßes Verfahren, wobei die Ausgangsmonomere zumindest teilweise durch Umsetzung von 5-(Hydroxymethyl)furfural hergestellt werden, wobei das 5-(Hydroxymethyl)furfural aus Biomasse hergestellt wurde.

Es kann als Vorteil des erfindungsgemäßen Verfahrens gesehen werden, dass dieses hinsichtlich der für die Herstellung der Ausgangsmonomere einzusetzenden Biomasse sehr flexibel ist und nach Einschätzung der Erfinder insoweit keine Einschränkungen bestehen. Hierdurch wird eine besonders große Versorgungssicherheit gewährleistet. Bevorzugt ist dabei ein erfindungsgemäßes Verfahren, wobei die Biomasse ausgewählt ist aus der Gruppe bestehend aus pflanzlicher und tierischer Biomasse, bevorzugt ausgewählt ist aus der Gruppe bestehend aus pflanzlicher Biomasse, besonders bevorzugt ausgewählt ist aus der Gruppe bestehend aus Getreidepflanzen.

Auch wenn bereits bei einem geringen Anteil von biobasierten Monomeren in der Ausgangszusammensetzung eine nachhaltigere Herstellung von Verbundmaterialien möglich ist, ist es zur Maximierung der Umweltverträglichkeit und zur Optimierung der Ressourcenausnutzung sinnvoll, wenn die Ausgangsmonomere zu einem möglichst großen Teil aus Biomasse hergestellt werden. In Übereinstimmung mit dem fachmännischen Verständnis bezeichnet dies erneut nicht die Herstellung der einzelnen Moleküle, sondern bezieht sich auf die Stoffmenge und damit auf den biobasierten Anteil der Ausgangsmonomere in der Ausgangszusammensetzung. Bevorzugt ist nämlich ein erfindungsgemäßes Verfahren, wobei die in der Ausgangszusammensetzung enthaltenen Ausgangsmonomer zu 40 % oder mehr, bevorzugt zu 70% oder mehr, besonders bevorzugt zu 90 % oder mehr, ganz besonders bevorzugt zu 95 % oder mehr, weiter bevorzugt zu 99 % oder mehr, insbesondere bevorzugt im Wesentlichen vollständig, aus Biomasse hergestellt werden, bezogen auf die Stoffmenge der in der Ausgangszusammensetzung enthaltenen Ausgangsmonomere. Hierbei ist es bevorzugt, wenn die vorstehend angegebenen Anteile für jedes der eingesetzten Ausgangsmonomere eingestellt werden.

Nach Einschätzung der Erfinder kann es als Vorteil des erfindungsgemäßen Verfahrens gesehen werden, dass neben den biobasierten Ausgangsmonomere auch solche Monomere eingesetzt werden können, welche in herkömmlicher Weise aus Erdöl hergestellt wurden, da das erfindungsgemäße Verfahren diesbezüglich flexibel ist. Auch wenn es mit Blick auf eine möglichst nachhaltige Herstellung der Verbundmaterialien vorteilhaft ist, den Anteil dieser Monomere so gering wie möglich zu halten, haben die Erfinder der vorliegenden Erfindung identifiziert, dass in der Möglichkeit zur Einbeziehung petrochemisch hergestellter Ausgangsmonomere mit Blick auf die Leistungsfähigkeit der erhaltenen Verstärkungskorde eine große Chance liegt. Insbesondere wenn die zur Verfügung stehenden biobasierten Ausgangsmonomere bei der Fertigung der Verbundmaterialien in Verstärkungskorden resultieren, die spezifische Erfordernisse der vorgesehenen Anwendung noch nicht hinreichend gut erfüllen, beispielsweise hinsichtlich des E-Moduls, kann durch die gezielte Zugabe von petrochemisch hergestellten Ausgangsmonomeren geeignet sein, solche Unzulänglichkeiten auszugleichen, wobei der Fachmann im Lichte der vorstehenden Ausführungen durch übliche Testreihen ermitteln kann, welcher Anteil an erdölbasierten Ausgangsmonomeren den idealen Kompromiss zwischen physikalisch-chemischen Eigenschaften der Verstärkungskorde und einer maximalen Nachhaltigkeit ermöglicht. Bevorzugt ist entsprechend ein erfindungsgemäßes Verfahren, wobei die in der Ausgangszusammensetzung enthaltenen Ausgangsmonomere zumindest teilweise aus Erdöl hergestellt werden, bezogen auf die Stoffmenge der in der Ausgangszusammensetzung enthaltenen Ausgangsmonomere. Bevorzugt ist insoweit ein erfindungsgemäßes Verfahren, wobei die in der Ausgangszusammensetzung enthaltenen Ausgangsmonomere zu 0,1 bis 60 %, bevorzugt zu 0,2 bis 30%, besonders bevorzugt zu 0,5 bis 10 %, ganz besonders bevorzugt zu 1 bis 5 %, aus Erdöl hergestellt werden, bezogen auf die Stoffmenge der in der Ausgangszusammensetzung enthaltenen Ausgangsmonomere.

Analog zu den vorstehenden Ausführungen ist es mit dem erfindungsgemäßen Verfahren vorteilhafterweise auch möglich, auf recyceltes Polyamid zurückzugreifen, d. h. auf Polyamid, welches zuvor bereits zu Produkten verarbeitet wurde und im Wertstoffkreislauf für die Wiederverwertung vorgesehen ist. Die im erfindungsgemäßen Verfahren einzusetzenden Ausgangsmonomere werden hierbei durch Depolymerisation des recycelten Polyamids gewonnen und können auf diese Weise in Schritt a) eingesetzt werden, wobei dem Fachmann für die Depolymerisation geeignete Verfahren bekannt sind. Für den Fachmann ist es hierbei bei der Durchführung des erfindungsgemäßen Verfahrens möglich, entsprechende Ausgangsmonomere, welche durch Depolymerisation von recycelten Polyamiden hergestellt wurden, beispielsweise selbst herzustellen oder ein entsprechendes Material von einem Zulieferer zuzukaufen. Bevorzugt ist somit ein erfindungsgemäßes Verfahren, wobei die in der Ausgangszusammensetzung enthaltenen Ausgangsmonomere zumindest teilweise durch Depolymerisation von recyceltem Polyamid hergestellt werden, bezogen auf die Stoffmenge der in der Ausgangszusammensetzung enthaltenen Ausgangsmonomere. Bevorzugt ist insoweit ein erfindungsgemäßes Verfahren, wobei die in der Ausgangszusammensetzung enthaltenen Ausgangsmonomere zu 0,1 bis 60 %, bevorzugt zu 0,2 bis 30%, besonders bevorzugt zu 0,5 bis 10 %, ganz besonders bevorzugt zu 1 bis 5 %, durch Depolymerisation von recyceltem Polyamid hergestellt werden, bezogen auf die Stoffmenge der in der Ausgangszusammensetzung enthaltenen Ausgangsmonomere.

In Übereinstimmung mit dem fachmännischen Verständnis werden die vorstehend beschriebenen Ausgangsmonomere, welche durch Depolymerisation von recyceltem Polyamid hergestellt wurden, auch dann nicht als erdölbasierte Ausgangsmonomere angesehen, wenn das zur Herstellung verwendete recycelte Polyamid zuvor aus Erdöl hergestellt wurde. Der Fachmann trennt somit bei der Verwendung der bevorzugten erfindungsgemäßen Verfahren zwischen den verschiedenen Ausgangsmonomeren in Abhängigkeit von der Bezugsquelle, insbesondere wenn sowohl petrochemisch hergestellte als auch recycelte Ausgangsmonomere eingesetzt werden sollen. Dies ist zielführend, da durch die Verwendung von durch Depolymerisation von recyceltem Polyamid hergestellten Ausgangsmonomeren zwar die Nachhaltigkeit der Materialien in vorteilhafter Weise erhöht werden kann, entsprechende Ausgangsmonomere jedoch in vielen Fällen weniger rein sind als frisch aus Erdöl hergestellte Materialien und somit sinnvollerweise als unterschiedliche Ausgangsmaterialien behandelt werden sollen.

Es kann als besonders überraschend angesehen werden, dass die vorstehend offenbarte Kombination dabei in vielen Fällen als vorteilhafter angesehen werden kann, als eine lediglich auf biobasierten Ausgangsmonomeren aufbauende Verfahrensführung. Ohne an diese Theorie gebunden sein zu wollen, scheint es möglich, dass die biobasierten Ausgangsmonomere und die durch Depolymerisation von recyceltem Polyamid hergestellten Ausgangsmonomere im Vergleich zu petrochemisch hergestellten Ausgangsmonomeren zwar jeweils über gewisse Unzulänglichkeiten verfügen, bspw. hinsichtlich etwaiger Verunreinigungen, sich diese zwischen den biobasierten und den mittels Depolymerisation von recyceltem Polyamid hergestellten Ausgangsmonomeren jedoch in vorteilhafter Weise ausgleichen, sodass eine besonders hohes Maß an Nachhaltigkeit erhalten wird, ohne dass etwaige Unzulänglichkeiten zu ausgeprägt in Erscheinung treten. Grundsätzlich kann der Einsatz von durch Depolymerisation von recyceltem Polyamid hergestellten Ausgangsmonomeren auch deshalb als besonders vorteilhaft gesehen werden, weil er die Versorgungssicherheit mit den notwendigen Ressourcen weiter erhöht. Insbesondere kann durch diesen Einsatz auch der Bedarf an Biomasse reduziert werden, was insbesondere mit Blick auf potentielle Konflikte mit der Nahrungsmittelversorgung als besonders vorteilhaft angesehen werden kann.

Die Erfinder der vorliegenden Erfindung haben nunmehr erkannt, dass besonders vorteilhafte Verbundmaterialien mit besonders vorteilhaften Verstärkungskorden nicht nur dann erreicht werden können, wenn die biobasierten Ausgangsmonomere mit petrochemisch hergestellten bzw. aus Depolymerisation von recyceltem Polyamid hergestellten Ausgangsmonomeren kombiniert werden, sondern dass in ganz besonders vorteilhaften Ausgestaltungen auch sämtliche dieser Monomere eingesetzt werden können, wobei besonders leistungsstarke Verbundmaterialien erhalten werden, deren Eigenschaften besonders präzise eingestellt werden können. Bevorzugt ist daher ein erfindungsgemäßes Verfahren, wobei die in der Ausgangszusammensetzung enthaltenen Ausgangsmonomere zu 40 % oder mehr, bevorzugt zu 70% oder mehr, besonders bevorzugt zu 90 % oder mehr, ganz besonders bevorzugt zu 95 % oder mehr aus Biomasse, zu 0,1 bis 59,9 %, bevorzugt zu 0,2 bis 29,8 %, besonders bevorzugt zu 0,5 bis 9,5 %, ganz besonders bevorzugt zu 1 bis 4 %, aus Erdöl und zu 0,1 bis 49,9 %, bevorzugt zu 0,2 bis 29,8 %, besonders bevorzugt zu 0,5 bis 9,5 %, ganz besonders bevorzugt zu 1 bis 4 % durch Depolymerisation von recyceltem Polyamid hergestellt werden, bezogen auf die Stoffmenge der in der Ausgangszusammensetzung enthaltenen Ausgangsmonomere.

Auch wenn eine Beimischung von nicht biobasierten Ausgangsmonomeren in die im erfindungsgemäßen Verfahren zu verwendeten Materialien auf der Ebene der Ausgangsmaterialien nach Einschätzung der Erfinder besonders bevorzugt ist, auch und gerade mit Blick auf die physikalisch-chemischen Eigenschaften der daraus zu erhaltenen Verstärkungskorde, haben die Erfinder der vorliegenden Erfindung erkannt, dass auch das hergestellte biobasierte Polyamidgarn bei der Verarbeitung in Verfahrensschritt b) mit anderen Polyamiden kombiniert werden kann, welche nicht biobasiert ist. Zwar ist es mit Blick auf die Nachhaltigkeit besonders bevorzugt, das biobasierte Polyamidgarn im Wesentlichen vollständig aus dem biobasierten Polyamid herzustellen, jedoch ist es analog zu den vorstehenden Ausführungen zur den Ausgangsmonomeren gerade für spezifische Hochleistungsanwendungen vorteilhaft, das Polyamidgarn mit weiteren Polyamiden zu vermischen, um die physikalisch-chemischen Eigenschaften ganz gezielt einstellen zu können.

Bevorzugt ist zunächst ein erfindungsgemäßes Verfahren, wobei das biobasierte Polyamidgarn das biobasierte Polyamid in einem Massenanteil von 40 % oder mehr, bevorzugt von 70% oder mehr, besonders bevorzugt von 90 % oder mehr, ganz besonders bevorzugt von 95 % oder mehr, weiter bevorzugt von 99 % oder mehr, umfasst, bezogen auf die Masse des biobasierten Polyamidgarns, wobei das biobasierte Polyamidgarn insbesondere bevorzugt aus dem biobasierte Polyamid besteht. Bevorzugt ist jedoch ein erfindungsgemäßes Verfahren, wobei dem biobasierten Polyamid vor und/oder während des Formens des biobasierten Polyamidgarns ein oder mehrere weitere Polyamide zugesetzt werden.

Für die Herstellung von besonders leistungsfähigen Verbundmaterialien, welche besonders leistungsstarke Verstärkungskorde aufweisen, schlagen die Erfinder der vorliegenden Erfindung vor, in dem biobasierten Polyamidgarn zusätzlich erdölbasiertes Polyamid vorzusehen, d. h. ein solches Polyamid, welches vollständig petrochemisch hergestellt wurde. Bevorzugt ist demnach ein erfindungsgemäßes Verfahren, wobei das biobasierte Polyamidgarn zusätzlich erdölbasiertes Polyamid umfasst, welches aus Erdöl hergestellt wird. Bevorzugt ist insoweit ein erfindungsgemäßes Verfahren, wobei das biobasierte Polyamidgarn erdölbasiertes Polyamid in einem Massenanteil im Bereich von 0,1 bis 60 %, bevorzugt im Bereich von 0,2 bis 30%, besonders bevorzugt im Bereich von 0,5 bis 10 %, ganz besonders bevorzugt im Bereich von 1 bis 5 %, umfasst, bezogen auf die Masse des Polyamidgarns.

Wie vorstehend erläutert, ist es möglich, recyceltes Polyamid durch Depolymerisation im erfindungsgemäßen Verfahren einzusetzen, wobei auf die dabei hergestellten Ausgangsmonomere zurückgegriffen wird. Dies ist mit Blick auf die Qualität der hergestellten Verbundmaterialien zwar regelmäßig bevorzugt, jedoch erfordert es auch ein vergleichsweise aufwendiges Verfahren, wodurch entsprechende Ausgangsmonomere regelmäßig weniger kosteneffizient hergestellt werden können. Eine kosteneffizientere Lösung, mit der die Versorgungssicherheit und die Abhängigkeit von erdölbasierten Rohstoffen aber auch von Biomasse trotzdem verringert werden kann, besteht darin, dem biobasierten Polyamidgarn bei der Verarbeitung in Verfahrensschritt b) recyceltes Polyamid zuzumischen, wobei auf den Schritt der Depolymerisation in vorteilhafter Weise verzichtet werden kann. Bevorzugt ist somit ein erfindungsgemäßes Verfahren, wobei das biobasierte Polyamidgarn zusätzlich recyceltes Polyamid umfasst, welches durch Recycling von polyamidhaltigen Produkten hergestellt wird. Bevorzugt ist insoweit ein erfindungsgemäßes Verfahren, wobei das biobasierte Polyamidgarn recyceltes Polyamid in einem Massenanteil im Bereich von 0,1 bis 60 %, bevorzugt im Bereich von 0,2 bis 30%, besonders bevorzugt im Bereich von 0,5 bis 10 %, ganz besonders bevorzugt im Bereich von 1 bis 5 %, umfasst, bezogen auf die Masse des biobasierte Polyamidgarns.

Als besonders vorteilhaft ist es nach Einschätzung der Erfinder, wenn das biobasierte Polyamid bei der Herstellung des Polyamidgarns sowohl mit recyceltem Polyamid als auch mit petrochemisch hergestelltem Polyamid kombiniert wird. Bevorzugt ist deshalb ein erfindungsgemäßes Verfahren, wobei das biobasierte Polyamidgarn das biobasierte Polyamid in einem Massenanteil von 40 % oder mehr, bevorzugt von 70% oder mehr, besonders bevorzugt von 90 % oder mehr, ganz besonders bevorzugt von 95 % oder mehr, das erdölbasierte Polyamid in einem Massenanteil im Bereich von 0,1 bis 60 %, bevorzugt im Bereich von 0,2 bis 30%, besonders bevorzugt im Bereich von 0,5 bis 10 %, ganz besonders bevorzugt im Bereich von 1 bis 5 %, und das recycelte Polyamid in einem Massenanteil im Bereich von 0,1 bis 60 %, bevorzugt im Bereich von 0,2 bis 30%, besonders bevorzugt im Bereich von 0,5 bis 10 %, ganz besonders bevorzugt im Bereich von 1 bis 5 %, jeweils bezogen auf die Masse des biobasierte Polyamidgarns, umfasst.

Grundsätzlich bevorzugt ist ein erfindungsgemäßes Verfahren, wobei das biobasierte Polyamid und/oder das erdölbasierte Polyamid und/oder das recycelte Polyamid, bevorzugt sämtliche Polyamide, PA6 oder PA6.6, bevorzugt PA6.6, umfassen, besonders bevorzugt aus PA6 oder PA6.6, insbesondere PA6.6, bestehen.

Die Erfinder der vorliegenden Erfindung konnten konstruktive Parameter identifizieren, mit denen sich für die biobasierten Polyamidgarne, welche im erfindungsgemäßen Verfahren geformt werden, besonders vorteilhafte Eigenschaften ergeben, die bei der Weiterverarbeitung zu Verstärkungskorden und der anschließenden Einbettung in eine vulkanisierbare Kautschukmischung zu besonders leistungsfähigen Verbundmaterialien führen. Bevorzugt ist nämlich ein erfindungsgemäßes Verfahren, wobei das Polyamidgarn eine Feinheit im Bereich von 200 bis 5000 dtex, bevorzugt im Bereich von 300 bis 2000 dtex oder im Bereich von 1700 bis 4500 dtex, besonders bevorzugt im Bereich von 400 bis 1900 dtex oder im Bereich von 1800 bis 2500 dtex, aufweist, wobei die unterschiedlichen Teilbereiche für verschiedene Anwendungen besonders geeignet sind, wobei in der Gürtelbandage zumeist kleinere Werte und in der Karkasse eher größere Werte Anwendung finden. Bevorzugt ist ebenfalls ein erfindungsgemäßes Verfahren, wobei das Polyamidgarn mit 100 bis 600 T/m, bevorzugt mit 150 bis 550 T/m, besonders bevorzugt mit 200 bis 500 T/m, verdreht ist.

Bevorzugt ist zudem ein erfindungsgemäßes Verfahren, wobei das Polyamidgarn einen Twistfaktor im Bereich von 100 bis 300, bevorzugt im Bereich von 150 bis 250, aufweist. Der Twistfaktor $\alpha$ ist eine dem Fachmann bekannte Größe und berechnet sich aus dem Twistlevel in T/m ("turns per meter") und der Feinheit in tex:

$$\alpha = T/m \sqrt{\frac{tex}{1000}}$$

Insbesondere für die Herstellung von Verbundmaterialien für den Einsatz als Gürtelbandagen ist ein erfindungsgemäßes Verfahren bevorzugt, wobei das Polyamidgarn eine Feinheit im Bereich von 300 bis 2000 dtex und einen Twistfaktor im Bereich von 100 bis 200 aufweist. Insbesondere für die Herstellung von Verbundmaterialien für den Einsatz in Karkasslagen ist ein erfindungsgemäßes Verfahren bevorzugt, wobei das Polyamidgarn eine Feinheit im Bereich von 1400 bis 5000 dtex und einen Twistfaktor im Bereich von 150 bis 250 aufweist.

Analog haben die Erfinder der vorliegenden Erfindung spezifische Aufbauten von Verstärkungskorden identifiziert, die beim Einsatz von biobasierten Polyamidgarnen besonders vorteilhaft sind. Bevorzugt ist nämlich ein erfindungsgemäßes Verfahren, wobei der Verstärkungskord zwei oder mehr Garne umfasst, wobei die Garne im Verstärkungskord bevorzugt mit 100 bis 600 T/m, besonders bevorzugt mit 150 bis 550 T/m, ganz besonders bevorzugt mit 200 bis 500 T/m, miteinander endverdreht sind. Bevorzugt ist ebenfalls ein erfindungsgemäßes Verfahren, wobei sämtliche Garne im Verstärkungskord eine Feinheit im Bereich von 200 bis 5000 dtex, bevorzugt im Bereich von 300 bis 2000 dtex oder im Bereich von 1700 bis 4500 dtex, besonders bevorzugt im Bereich von 400 bis 1900 dtex oder im Bereich von 1800 bis 2500 dtex, aufweisen. Bevorzugt ist auch ein erfindungsgemäßes Verfahren, wobei der Verstärkungskord eine Gesamtfeinheit im Bereich von 400 bis 10000 dtex, bevorzugt im Bereich von 600 bis 7500 dtex, besonders bevorzugt im Bereich von 800 bis 5000 dtex, aufweist.

Insbesondere für die Herstellung von Verbundmaterialien für den Einsatz als Gürtelbandagen bzw. Karkasslagen sind erfindungsgemäße Verfahren bevorzugt, in denen sämtliche Garne wie vorstehend erläutert ausgeführt sind.

Um die größtmöglichen Effekte hinsichtlich der Nachhaltigkeit des erfindungsgemäßen Verfahrens und der damit hergestellten Verbundmaterialien zu erreichen, schlagen die Erfinder der vorliegenden Erfindung vor, die Verstärkungskorde möglichst weitgehend aus dem biobasierten Polyamid auszubilden. Bevorzugt ist daher ein erfindungsgemäßes Verfahren, wobei 30 % oder mehr, bevorzugt 50 % oder mehr, besonders bevorzugt 70 % oder mehr, ganz besonders bevorzugt 90 % oder mehr, insbesondere bevorzugt im Wesentlichen sämtliche, der im Verstärkungskord enthaltenen Garne biobasierte Polyamidgarne sind.

Nach Einschätzung der Erfinder stellt jedoch die Kombination der biobasierten Polyamidgarne mit anderen Garnen eine besonders relevante Ausführungsform dar, durch die die Verstärkungskorde besonders effizient an die jeweiligen Erfordernisse der entsprechenden Anwendungen angepasst werden können. Hierdurch können Verstärkungskorde erhalten werden, deren Gesamteigenschaften besonders flexibel einstellbar sind. Hierbei schlagen die Erfinder der vorliegenden Erfindung als ganz besonders vorteilhafte Ausgestaltung ein erfindungsgemäßes Verfahren vor, bei dem die biobasierten Polyamidgarne mit biobasiertem PET und/oder recyceltem PET zu einem Verstärkungskord umgesetzt werden. Überraschenderweise ist diese Kombination von Materialien nicht nur mit Blick auf die Nachhaltigkeit des Herstellungsprozesses und die Verringerung der Ressourcenabhängigkeit besonders vorteilhaft, sondern die Leistungsfähigkeit entsprechender Verstärkungskorde und der damit hergestellten Verbundmaterialien ist überraschenderweise gegenüber dem Einsatz von petrochemisch hergestellten Materialien nicht bzw. nur unwesentlich verschlechtert. Explizit bevorzugt ist daher ein erfindungsgemäßes Verfahren, wobei der Verstärkungskord ein oder mehrere weitere Garne umfasst, die aus Materialien bestehen, die ausgewählt sind aus der Gruppe bestehend aus Aramid, Polyethylenterephthalat, Polyetherketon, Polyketon, Polyethylennaphtalat, Rayon, Viskose, Kohlefasern, Naturfasern, Glasfasern und PBO (Poly(p-phenylen-2,6-benzobisoxazol)), bevorzugt ausgewählt sind aus der Gruppe bestehend aus Aramid und Polyethylenterephthalat, besonders bevorzugt ausgewählt sind aus der Gruppe bestehend aus biobasiertem Polyethylenterephthalat und recyceltem Polyethylenterephthalat.

Im Rahmen der vorliegenden Erfindung bedeutet der Ausdruck "biobasiertes Polyethylenterephthalat" in Übereinstimmung mit der vorstehenden Definition für biobasierten Polyamid, dass das biobasierte Polyethylenterephthalat durch Polymerisation von Monomeren hergestellt wurde, die zumindest teilweise aus Biomasse hergestellt werden. Dabei ist zumindest die Terephthalsäure oder das Ethylenglycol, bevorzugt sowohl die Terephthalsäure als auch das Ethylenglycol, zumindest teilweise, besonders bevorzugt im Wesentlichen vollständig, aus Biomasse hergestellt.

Im Rahmen der vorliegenden Erfindung bezeichnet der Ausdruck "recyceltes Polyethylenterephthalat" in Übereinstimmung mit der vorstehenden Definition für recyceltes Polyamid solches Polyethylenterephthalat, welches zuvor bereits zu Produkten verarbeitet wurde und im Wertstoffkreislauf für die Wiederverwertung vorgesehen ist, und umfasst direkt recyceltes Polyethylenterephthalat und solches, welches aus Monomeren gewonnen wurde, welche durch Depolymerisation aus altem Polyethylenterephthalat gewonnen wurden.

Zum Erhalt von Verbundmaterialien, welche für die Fertigung von Fahrzeugluftreifen besonders geeignet sind, ist es regelmäßig sinnvoll, die Verstärkungskorde vollständig in der vulkanisierbaren Kautschukmischung einzubetten. Hierbei können die Verstärkungskorde vorteilhafterweise sowohl als einzelne Stränge als auch aus Gewebe aus Verstärkungskorden eingesetzt werden. Bevorzugt ist folglich ein erfindungsgemäßes Verfahren, wobei der Verstärkungskord zumindest abschnittsweise vollständig in die vulkanisierbare Kautschukmischung eingebettet wird, so dass der Verstärkungskord zumindest abschnittsweise vollständig von der vulkanisierbaren Kautschukmischung umgeben ist. Für bestimmte Anwendungen bevorzugt ist zudem ein erfindungsgemäßes Verfahren, wobei der Verstärkungskord als Bestandteil eines Gewebes aus Verstärkungskorden in die vulkanisierbare Kautschukmischung eingebettet wird.

Zur Optimierung der Eigenschaften der mit dem erfindungsgemäßen Verfahren herstellbaren Verbundmaterialien hat es sich als vorteilhaft erwiesen, zudem eine Beschichtung der Verstärkungskorde bzw. der daraus hergestellten Gewebe vorzusehen, was zielführenderweise im Rahmen einer Heißverstreckung erfolgen kann. Insbesondere wenn besonders hohe Anteile an biobasiertem Polyamid und optional besonders hohe an recyceltem Polyamid verwendet werden, ist der Einsatz leistungsfähiger Haftimprägnierung nach Einschätzung der Erfinder besonders ratsam, um eine hohe Verbundfestigkeit in den hergestellten Verbundmaterialien zu gewährleisten. Bevorzugt ist entsprechend ein erfindungsgemäßes Verfahren, zusätzlich umfassend vor Verfahrensschritt c) den Verfahrensschritt Schritt c0):

c0) Beschichten des Verstärkungskordes mit einer Beschichtungssubstanz, wobei beim Beschichten des Verstärkungskordes bevorzugt eine Heißverstreckung des Verstärkungskordes erfolgt, und/oder wobei die Beschichtungssubstanz bevorzugt ausgewählt ist aus der Gruppe bestehend aus Haftimprägnierungen, besonders bevorzugt ausgewählt ist aus der Gruppe bestehend aus RFL-Dips, umfassend Resorcin, Formaldehyd und Latex, und wässrigen Dispersionen, wobei die wässrigen Dispersionen im Wesentlichen frei sind von freiem Resorcin sowie Resorcin-Vorkondensaten, insbesondere Resorcin-Formaldehyd-Vorkondensaten, und frei sind von freiem Formaldehyd sowie Formaldehyd freisetzenden Substanzen.

Es kann als großer Vorteil des erfindungsgemäßen Verfahrens gesehen werden, dass dieses prinzipiell hinsichtlich der einzusetzenden vulkanisierbaren Kautschukmischung sehr flexibel ist. Trotzdem ist es den Erfindern der vorliegenden Erfindung gelungen, insoweit besonders geeignete Zusammensetzungen zu identifizieren.

Bevorzugt ist nämlich ein erfindungsgemäßes Verfahren, wobei die vulkanisierbare Kautschukmischung wenigstens einen Dienkautschuk umfasst, wobei der Dienkautschuk bevorzugt ausgewählt ist aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, Nitril-Kautschuk, Acrylat-Kautschuk, Silikon-Kautschuk, Polysulfid-Kautschuk, Epichlorhydrin-Kautschuk, Styrol-Isopren-Butadien-Terpolymer, hydrierter Acrylnitrilbutadienkautschuk, Isopren-Butadien-Copolymer und hydriertem Styrol-Butadien-Kautschuk, wobei der Dienkautschuk besonders bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

Bevorzugt ist darüber hinaus ein erfindungsgemäßes Verfahren, wobei die vulkanisierbare Kautschukmischung 0,5 bis 8,0 phr, bevorzugt 0,5 bis 4 phr, besonders bevorzugt 0,5 bis 2 phr, Schwefel umfasst.

Bevorzugt ist auch ein erfindungsgemäßes Verfahren, wobei die vulkanisierbare Kautschukmischung 0,1 bis 100 phr eines oder mehrerer Füllstoffe umfasst, wobei die Füllstoffe ausgewählt sind aus der Gruppe bestehend aus polaren und unpolaren Füllstoffen, bevorzugt ausgewählt sind aus der Gruppe bestehend aus Ruß, Aluminiumhydroxid, Titandioxid, Magnesiumoxid, amorphen Siliciumdioxid und Schichtsilikaten, besonders bevorzugt ausgewählt sind aus der Gruppe bestehend aus Ruß und amorphen Siliciumdioxid, wobei die vulkanisierbare Kautschukmischung ganz besonders bevorzugt einen polaren Füllstoff und eine oder mehrere Silan-Verbindungen zum Anbinden der polaren Füllstoffe umfasst.

Bevorzugt ist zudem ein erfindungsgemäßes Verfahren, wobei die vulkanisierbare Kautschukmischung ein oder mehrere Additive umfasst, die ausgewählt sind aus der Gruppe bestehend aus Verstärkerharzen, Methylen-Donoren, Kupplungsagenzien, Haftvermittlern und Weichmachern.

Bevorzugt ist ebenfalls ein erfindungsgemäßes Verfahren, wobei die vulkanisierbare Kautschukmischung ein oder mehrere weitere Zusatzstoffe umfasst, die ausgewählt sind aus der Gruppe bestehend aus Vernetzern, Schwefelspendern, Beschleunigern, Verzögerern, Ozonschutzmitteln, Alterungsschutzmitteln, Mastikationshilfsmittel, Verarbeitungshilfsmitteln und Aktivatoren, wobei die Gesamtmenge der weiteren Zusatzstoffe vorzugsweise bis zu 150 phr, bevorzugt bis zu 100 phr, besonders bevorzugt 5 bis 50 phr, beträgt.

Wie vorstehend erläutert, können mit den Verbundmaterialien, welche in dem erfindungsgemäßen Verfahren hergestellt werden, vorteilhafterweise besonders leistungsfähige Fahrzeugreifen erhalten werden, deren Fertigung insgesamt besonders nachhaltig ist. Dies erfolgt auf der Weise, dass die Verbundmaterialien mit anderen Reifenkomponenten zu einem Fahrzeugreifenrohling kombiniert werden, welcher anschließend unter üblichen Bedingungen vulkanisiert werden kann.

Die Erfindung betrifft somit zudem ein Verfahren zur Herstellung eines Fahrzeugreifens, bevorzugt eines Fahrzeugluftreifens, umfassend die Verfahrensschritte des erfindungsgemäßen Verfahrens zum Herstellen eines Verbundmaterials, zusätzlich umfassend die Verfahrensschritte:

> d) Herstellen eines Fahrzeugreifenrohlings umfassend das Verbundmaterial, und
>
> e) Vulkanisieren des Fahrzeugreifenrohlings zum Erhalt eines vulkanisierten Fahrzeugreifens.

Bevorzugt ist dabei ein erfindungsgemäßes Verfahren, wobei der Fahrzeugreifenrohling das Verbundmaterial als Teil der Karkasse und/oder als Teil des Gürtels und/oder als Gürtelbandage und/oder als Wulstverstärker, bevorzugt als Teil der Karkasse und/oder als Gürtelbandage, umfasst.

Vor dem Hintergrund der vorstehenden Ausführungen zu dem erfindungsgemäßen Verfahren und der hohen Relevanz der in dem erfindungsgemäßen Verfahren einzusetzenden spezifischen Verstärkungskorde ist für den Fachmann ersichtlich, dass die vorliegende Erfindung zudem einen Verstärkungskord betrifft.

Die Erfindung betrifft somit auch einen Verstärkungskord für die Verwendung als Festigkeitsträger, insbesondere für die Anwendung als Wulstverstärker, in der Gürtelbandage, im Gürtel und/oder in der Karkasse von Fahrzeugreifen, geeignet für den Einsatz in einem erfindungsgemäßen Verfahren, umfassend zumindest ein biobasiertes Polyamidgarn enthaltend biobasiertes Polyamid, wobei das biobasierte Polyamid zumindest teilweise aus den Ausgangsmonomeren

> i) ε-Aminocapronsäure und/oder ε-Caprolactam, oder
>
> ii) Hexamethylendiamin und Hexamethylendicarbonsäure,

hergestellt ist, wobei die Ausgangsmonomere zumindest teilweise aus Biomasse hergestellt wurden, bezogen auf die Stoffmenge der Ausgangsmonomere.

Die erfindungsgemäßen Verstärkungskorde können besonders nachhaltig gefertigt werden und verringern dadurch die Abhängigkeit von fossilen Rohstoffen bei der Herstellung von Fahrzeugreifen. Zudem weisen die erfindungsgemäßen Verstärkungskorde überraschenderweise ausgezeichnete physikalisch-chemischen Eigenschaften auf, welche die Verarbeitung zu besonders leistungsfähigen Verbundmaterialien bzw. zu vorteilhaften Fahrzeugreifen ermöglichen.

Im Lichte der vorstehenden Ausführungen ist ersichtlich, dass erfindungsgemäße Verstärkungskorde bevorzugt sind, die in bevorzugten erfindungsgemäßen Verfahren eingesetzt werden können, wobei sich jeweils die vorstehend beschriebenen Vorteile ergeben.

Bevorzugt ist demnach auch ein erfindungsgemäßer Verstärkungskord, wobei das biobasierte Polyamid zumindest teilweise, bevorzugt vollständig, aus den Ausgangsmonomeren ε-Aminocapronsäure und/oder ε-Caprolactam, bevorzugt ε-Caprolactam, hergestellt ist.

Bevorzugt ist somit auch ein erfindungsgemäßer Verstärkungskord, wobei das biobasierte Polyamid zumindest teilweise, bevorzugt vollständig, aus den Ausgangsmonomeren Hexamethylendiamin und Hexamethylendicarbonsäure hergestellt ist.

Bevorzugt ist ebenfalls ein erfindungsgemäßer Verstärkungskord, wobei das Hexamethylendiamin 1,6-Diaminohexan ist und/oder wobei die Hexamethylendicarbonsäure 1,6-Hexandisäure ist.

Bevorzugt ist entsprechend auch ein erfindungsgemäßer Verstärkungskord, wobei die Ausgangsmonomere zumindest teilweise durch Umsetzung von 5-(Hydroxymethyl)furfural hergestellt wurden, wobei das 5-(Hydroxymethyl)furfural aus Biomasse hergestellt wurde.

Bevorzugt ist folglich auch ein erfindungsgemäßer Verstärkungskord, wobei die Biomasse ausgewählt ist aus der Gruppe bestehend aus pflanzlicher und tierischer Biomasse, bevorzugt ausgewählt ist aus der Gruppe bestehend aus pflanzlicher Biomasse, besonders bevorzugt ausgewählt ist aus der Gruppe bestehend aus Getreidepflanzen.

Bevorzugt ist daher auch ein erfindungsgemäßer Verstärkungskord, wobei die Ausgangsmonomer zu 40 % oder mehr, bevorzugt zu 70% oder mehr, besonders bevorzugt zu 90 % oder mehr, ganz besonders bevorzugt zu 95 % oder mehr, weiter bevorzugt zu 99 % oder mehr, insbesondere bevorzugt im Wesentlichen vollständig, aus Biomasse hergestellt werden, bezogen auf die Stoffmenge der Ausgangsmonomere.

Bevorzugt ist somit auch ein erfindungsgemäßer Verstärkungskord, wobei die Ausgangsmonomere zumindest teilweise aus Erdöl hergestellt werden, bezogen auf die Stoffmenge der Ausgangsmonomere.

Bevorzugt ist folglich auch ein erfindungsgemäßer Verstärkungskord, wobei die Ausgangsmonomere zu 0,1 bis 60 %, bevorzugt zu 0,2 bis 30%, besonders bevorzugt zu 0,5 bis 10 %, ganz besonders bevorzugt zu 1 bis 5 %, aus Erdöl hergestellt werden, bezogen auf die Stoffmenge der Ausgangsmonomere.

Bevorzugt ist entsprechend auch ein erfindungsgemäßer Verstärkungskord, wobei die Ausgangsmonomere zumindest teilweise durch Depolymerisation von recyceltem Polyamid hergestellt werden, bezogen auf die Stoffmenge der Ausgangsmonomere.

Bevorzugt ist demnach auch ein erfindungsgemäßer Verstärkungskord, wobei die Ausgangsmonomere zu 0,1 bis 60 %, bevorzugt zu 0,2 bis 30%, besonders bevorzugt zu 0,5 bis 10 %, ganz besonders bevorzugt zu 1 bis 5 %, durch Depolymerisation von recyceltem Polyamid hergestellt werden, bezogen auf die Stoffmenge der Ausgangsmonomere.

Bevorzugt ist ebenfalls ein erfindungsgemäßer Verstärkungskord, wobei die Ausgangsmonomere zu 40 % oder mehr, bevorzugt zu 70% oder mehr, besonders bevorzugt zu 90 % oder mehr, ganz besonders bevorzugt zu 95 % oder mehr aus Biomasse, zu 0,1 bis 59,9 %, bevorzugt zu 0,2 bis 29,8 %, besonders bevorzugt zu 0,5 bis 9,5 %, ganz besonders bevorzugt zu 1 bis 4 %, aus Erdöl und zu 0,1 bis 49,9 %, bevorzugt zu 0,2 bis 29,8 %, besonders bevorzugt zu 0,5 bis 9,5 %, ganz besonders bevorzugt zu 1 bis 4 % durch Depolymerisation von recyceltem Polyamid hergestellt werden, bezogen auf die Stoffmenge der Ausgangsmonomere.

Bevorzugt ist zudem auch ein erfindungsgemäßer Verstärkungskord, wobei das biobasierte Polyamidgarn das biobasierte Polyamid in einem Massenanteil von 40 % oder mehr, bevorzugt von 70% oder mehr, besonders bevorzugt von 90 % oder mehr, ganz besonders bevorzugt von 95 % oder mehr, weiter bevorzugt von 99 % oder mehr, umfasst, bezogen auf die Masse des biobasierten Polyamidgarns, wobei das biobasierte Polyamidgarn insbesondere bevorzugt aus dem biobasierte Polyamid besteht.

Bevorzugt ist somit auch ein erfindungsgemäßer Verstärkungskord, wobei das biobasierte Polyamidgarn zusätzlich erdölbasiertes Polyamid umfasst, welches aus Erdöl hergestellt wird.

Bevorzugt ist folglich auch ein erfindungsgemäßer Verstärkungskord, wobei das biobasierte Polyamidgarn erdölbasiertes Polyamid in einem Massenanteil im Bereich von 0,1 bis 60 %, bevorzugt im Bereich von 0,2 bis 30%, besonders bevorzugt im Bereich von 0,5 bis 10 %, ganz besonders bevorzugt im Bereich von 1 bis 5 %, umfasst, bezogen auf die Masse des Polyamidgarns.

Bevorzugt ist entsprechend auch ein erfindungsgemäßer Verstärkungskord, wobei das biobasierte Polyamidgarn zusätzlich recyceltes Polyamid umfasst, welches durch Recycling von polyamidhaltigen Produkten hergestellt wird.

Bevorzugt ist daher auch ein erfindungsgemäßer Verstärkungskord, wobei das biobasierte Polyamidgarn recyceltes Polyamid in einem Massenanteil im Bereich von 0,1 bis 60 %, bevorzugt im Bereich von 0,2 bis 30%, besonders bevorzugt im Bereich von 0,5 bis 10 %, ganz besonders bevorzugt im Bereich von 1 bis 5 %, umfasst, bezogen auf die Masse des biobasierte Polyamidgarns.

Bevorzugt ist demnach auch ein erfindungsgemäßer Verstärkungskord, wobei das biobasierte Polyamidgarn das biobasierte Polyamid in einem Massenanteil von 40 % oder mehr, bevorzugt von 70% oder mehr, besonders bevorzugt von 90 % oder mehr, ganz besonders bevorzugt von 95 % oder mehr, das erdölbasierte Polyamid in einem Massenanteil im Bereich von 0,1 bis 60 %, bevorzugt im Bereich von 0,2 bis 30%, besonders bevorzugt im Bereich von 0,5 bis 10 %, ganz besonders bevorzugt im Bereich von 1 bis 5 %, und das recycelte Polyamid in einem Massenanteil im Bereich von 0,1 bis 60 %, bevorzugt im Bereich von 0,2 bis 30%, besonders bevorzugt im Bereich von 0,5 bis 10 %, ganz besonders bevorzugt im Bereich von 1 bis 5 %, jeweils bezogen auf die Masse des biobasierte Polyamidgarns, umfasst.

Bevorzugt ist somit auch ein erfindungsgemäßer Verstärkungskord, wobei das biobasierte Polyamid und/oder das erdölbasierte Polyamid und/oder das recycelte Polyamid, bevorzugt sämtliche Polyamide, PA6 oder PA6.6, bevorzugt PA6.6, sind.

Bevorzugt ist weiterhin auch ein erfindungsgemäßer Verstärkungskord, wobei das Polyamidgarn eine Feinheit im Bereich von 200 bis 5000 dtex, bevorzugt im Bereich von 300 bis 2000 dtex oder im Bereich von 1700 bis 4500 dtex, besonders bevorzugt im Bereich von 400 bis 1900 dtex oder im Bereich von 1800 bis 2500 dtex, aufweist.

Bevorzugt ist darüber hinaus auch ein erfindungsgemäßer Verstärkungskord, wobei das Polyamidgarn mit 100 bis 600 T/m, bevorzugt mit 150 bis 550 T/m, besonders bevorzugt mit 200 bis 500 T/m, verdreht ist.

Bevorzugt ist zudem auch ein erfindungsgemäßer Verstärkungskord, wobei der Verstärkungskord zwei oder mehr Garne umfasst, wobei die Garne im Verstärkungskord bevorzugt mit 100 bis 600 T/m, besonders bevorzugt mit 150 bis 550 T/m, ganz besonders bevorzugt mit 200 bis 500 T/m, miteinander endverdreht sind.

Bevorzugt ist ebenfalls ein erfindungsgemäßer Verstärkungskord, wobei sämtliche Garne im Verstärkungskord eine Feinheit im Bereich von 200 bis 5000 dtex, bevorzugt im Bereich von 300 bis 2000 dtex oder im Bereich von 1700 bis 4500 dtex, besonders bevorzugt im Bereich von 400 bis 1900 dtex oder im Bereich von 1800 bis 2500 dtex, aufweisen.

Bevorzugt ist somit auch ein erfindungsgemäßer Verstärkungskord, wobei der Verstärkungskord eine Gesamtfeinheit im Bereich von 400 bis 10000 dtex, bevorzugt im Bereich von 600 bis 7500 dtex, besonders bevorzugt im Bereich von 800 bis 5000 dtex, aufweist.

Bevorzugt ist daher auch ein erfindungsgemäßer Verstärkungskord, wobei 30 % oder mehr, bevorzugt 50 % oder mehr, besonders bevorzugt 70 % oder mehr, ganz besonders bevorzugt 90 % oder mehr, insbesondere bevorzugt im Wesentlichen sämtliche, der im Verstärkungskord enthaltenen Garne biobasierte Polyamidgarne sind.

Bevorzugt ist folglich auch ein erfindungsgemäßer Verstärkungskord, wobei der Verstärkungskord ein oder mehrere weitere Garne umfasst, die aus Materialien bestehen, die ausgewählt sind aus der Gruppe bestehend aus Aramid, Polyethylenterephthalat, Polyetherketon, Polyketon, Polyethylennaphtalat, Rayon, Viskose, Naturfasern und Glasfaserm, bevorzugt ausgewählt sind aus der Gruppe bestehend aus Aramid und Polyethylenterephthalat, besonders bevorzugt ausgewählt sind aus der Gruppe bestehend aus biobasiertem Polyethylenterephthalat.

Die Erfindung betrifft darüber hinaus ein Verbundmaterial für die Herstellung von Fahrzeugreifen, bevorzugt hergestellt oder herstellbar mit dem erfindungsgemäßen Verfahren, umfassend:

x) eine vulkanisierbare Kautschukmischung, und

y) einen oder mehrere in der vulkanisierbaren Kautschukmischung eingebettete erfindungsgemäße Verstärkungskorde.

Bevorzugt ist dabei ein erfindungsgemäßes Verbundmaterial, wobei der Verstärkungskord zumindest abschnittsweise vollständig in die vulkanisierbare Kautschukmischung eingebettet ist, so dass der Verstärkungskord zumindest abschnittsweise vollständig von der vulkanisierbaren Kautschukmischung umgeben ist.

Die Erfindung betrifft auch einen Fahrzeugreifen, insbesondere Fahrzeugluftreifen, bevorzugt hergestellt oder herstellbar mit dem erfindungsgemäßen Verfahren, umfassend ein vulkanisiertes erfindungsgemäßes Verbundmaterial. Bevorzugt ist dabei ein erfindungsgemäßer Fahrzeugreifen, wobei der Fahrzeugreifen das vulkanisierte erfindungsgemäße Verbundmaterial als Teil der Karkasse und/oder als Gürtelbandage umfasst.

Für das erfindungsgemäße Verbundmaterial und den erfindungsgemäßen Fahrzeugreifen ergeben sich die vorstehend für das erfindungsgemäße Verfahren offenbarten Vorteile.

Die Erfindung betrifft abschließend die Verwendung eines erfindungsgemäßen Verstärkungskords oder eines erfindungsgemäßen Verbundmaterials bei der Herstellung von Fahrzeugreifen zur Senkung des Bedarfs an fossilen Ressourcen.

Beispiel A:

Als besonders vorteilhafte Ausgestaltung der Erfindung schlagen die Erfinder das folgende erfindungsgemäße Verfahren vor.

Es wird 5-(Hydroymethyl)furfural bereitgestellt, welches aus Maissirup mit hohem Fructosegehalt gewonnen wird. Ausgehend von diesem Material erfolgt die Umsetzung zu 1,6-Diaminohexan und 1,6-Hexandisäure, welche nach einer Aufreinigung in Verfahrensschritt a) als Ausgangsmonomere eingesetzt werden.

Die Ausgangszusammensetzung enthält die entsprechenden Ausgangsmonomere im Wesentlichen im stöchiometrischen Verhältnis, wobei bedingt durch die Herstellung im Wesentlichen sämtliche der Ausgangsmonomere in der Ausgangszusammensetzung aus Biomasse hergestellt sind. Diese Ausgangszusammensetzung wird durch Polymerisation zu dem Polyamid PA6.6 umgesetzt, wobei die Herstellung über das Zwischenprodukt Hexamethylendiaminadipat ("AH-Salz") erfolgt. Das Polyamid PA6.6 wird anschließend mittels eines Schmelzspinnverfahrens zu einer Polyamidgarn verarbeitet. Das Polyamidgarn weist dabei eine Feinheit von 1400 dtex.

Zwei dieser biobasierten Polyamidgarne werden anschließend mit einem Twistfaktor von 150 verdreht, sodass sich für den Verstärkungskord eine Gesamtfeinheit von 2800 dtex (1400x2) ergibt, wodurch der Verstärkungskord besonders für den Einsatz in einer Gürtelbandage geeignet ist. Die so erhaltenen Verstärkungskorde werden anschließend durch Kalandrieren in einer vulkanisierbaren Kautschukmischung eingebettet, sodass diese im dadurch hergestellten Verbundmaterial im Wesentlichen vollständig von der vulkanisierbaren Kautschukmischung umgeben sind. Hierfür werden die Verstärkungskorde zuvor mit einem RFL-Dip als Haftimprägnierung beschichtet.

Die eingesetzte vulkanisierbare Kautschukmischung umfasst 100 phr Polyisopren, 65 phr Ruß, 1,5 phr Schwefel, 4 phr eines Verstärkerharzes, 4 phr Zinkoxid, 3 phr Alterungsschutzmittel, 0,5 phr Stearinsäure und 1 phr Beschleuniger DCBS.

Das so hergestellte vulkanisierbare Verbundmaterial kann anschließend mit weiteren Komponenten zu einem Fahrzeugreifenrohling zusammengesetzt werden, aus dem durch Vulkanisation ein Fahrzeugreifen erhalten werden kann.

Beispiel B:

Als vorteilhafte Abwandlung zu dem vorstehend beschriebenen beispielhaften Verfahren A wird vorgeschlagen, die Zusammensetzung der Ausgangszusammensetzung in Verfahrensschritt a) zu verändern. Als beispielhafte Varianten seien hier Ausgangszusammensetzungen genannt, bei denen die Ausgangsmonomere zu 95 % aus Biomasse und zu 5 % aus Erdöl hergestellt werden. Alternativ werden die Ausgangsmonomere beispielsweise zu 80 % aus Biomasse und zu 20 % durch Depolymerisation von recyceltem Polyamid hergestellt. Als besonders bevorzugtes Beispiel werden die Ausgangsmonomere zu 94 % aus Biomasse, zu 4 % durch Depolymerisation von recyceltem Polyamid und zu 2 % aus Erdöl hergestellt.

Beispiel C:

Als weitere vorteilhafte Abwandlung zu den vorstehend beschriebenen beispielhaften Verfahren A und B wird das beispielhafte Verfahren dahingehend geändert, dass in Verfahrensschritt b) das Polyamid während des Formens des biobasierten Polyamidgarns mit weiteren Polyamiden vermischt wird, was beispielsweise im Extruder erfolgen kann. Dies kann beispielsweise so erfolgen, dass der Massenanteil des biobasierten Polyamids bei 97 % und der Massenanteil von erdölbasiertem Polyamid bei 3 % liegt. Alternativ kann der Massenanteil von biobasiertem Polyamid beispielsweise auf 74 % eingestellt werden, wobei die weiteren 26 % durch recyceltes Polyamid gebildet werden, welches beispielsweise durch Recycling von Polyamid-Textilien erhalten wird. In einer besonders bevorzugten beispielhaften Ausgestaltung umfasst das biobasierte Polyamidgarn 75 % biobasiertes Polyamid, 20 % recyceltes Polyamid und 5 % erdölbasiertes Polyamid.

Beispiel D:

Als weitere vorteilhafte Abwandlung zu dem vorstehend beschriebenen beispielhaften Verfahren A B und C wird vorgeschlagen, in den Verstärkungskorden jeweils eines der biobasierten Polyamidgarne gegen ein Aramidgarn bzw. ein PET-Garn auszutauschen. In einer besonders vorteilhaften Weiterbildung dieses Beispiels handelt es sich bei dem PET-Garn um ein PET-Garn, welches aus recyceltem PET ausgebildet ist oder welches zumindest teilweise aus Biomasse hergestellt wurde.

**Patentansprüche**

1. Verfahren zum Herstellen eines Verbundmaterials zur Verwendung bei der Herstellung von Fahrzeugreifen, umfassend die folgenden Verfahrensschritte:

    a) Herstellen oder Bereitstellen einer Ausgangszusammensetzung umfassend als Ausgangsmonomere:

        i) ε-Aminocapronsäure und/oder ε-Caprolactam, und/oder
        ii) Hexamethylendiamin und Hexamethylendicarbonsäure,

    wobei die in der Ausgangszusammensetzung enthaltenen Ausgangsmonomere zumindest teilweise aus Biomasse hergestellt werden, bezogen auf die Stoffmenge der in der Ausgangszusammensetzung enthaltenen Ausgangsmonomere,
    b) Polymerisieren der in der Ausgangszusammensetzung enthaltenen Ausgangsmonomere zu einem biobasierten Polyamid, Formen des biobasierten Polyamids zu einem biobasierten Polyamidgarn, und Verarbeiten des biobasierten Polyamidgarns zu einem Verstärkungskord, und
    c) Einbetten des Verstärkungskords in eine vulkanisierbare Kautschukmischung zum Erhalt des Verbundmaterials.

2. Verfahren nach Anspruch 1, wobei die in der Ausgangszusammensetzung enthaltenen Ausgangsmonomer zu 40 % oder mehr aus Biomasse hergestellt werden, bezogen auf die Stoffmenge der in der Ausgangszusammensetzung enthaltenen Ausgangsmonomere.

3. Verfahren nach einem der Ansprüche 1 oder 2, wobei die in der Ausgangszusammensetzung enthaltenen Ausgangsmonomere zumindest teilweise aus Erdöl hergestellt werden, und/oder wobei die in der Ausgangszusammensetzung enthaltenen Ausgangsmonomere zumindest teilweise durch Depolymerisation von recyceltem Polyamid hergestellt werden.

4. Verfahren nach einem der Ansprüche 1 bis 3, wobei das biobasierte Polyamidgarn das biobasierte Polyamid in einem Massenanteil von 40 % oder mehr umfasst, bezogen auf die Masse des biobasierten Polyamidgarns.

5. Verfahren nach einem der Ansprüche 1 bis 4, wobei das biobasierte Polyamidgarn zusätzlich erdölbasiertes Polyamid umfasst, welches aus Erdöl hergestellt wird, und/oder wobei das biobasierte Polyamidgarn zusätzlich recyceltes Polyamid umfasst, welches durch Recycling von polyamidhaltigen Produkten hergestellt wird.

6. Verfahren nach einem der Ansprüche 1 bis 5, wobei der Verstärkungskord ein oder mehrere weitere Garne umfasst, die aus Materialien bestehen, die ausgewählt sind aus der Gruppe bestehend aus Aramid, Polyethylenterephthalat, Polyetherketon, Polyketon, Polyethylennaphtalat, Rayon, Viskose, Kohlefasern, Naturfasern, Glasfasern und Poly(p-phenylen-2,6-benzobisoxazol), bevorzugt ausgewählt sind aus der Gruppe bestehend aus Aramid und Polyethylenterephthalat, besonders bevorzugt ausgewählt sind aus der Gruppe bestehend aus biobasiertem Polyethylenterephthalat und recyceltem Polyethylenterephthalat.

7. Verfahren zur Herstellung eines Fahrzeugreifens, bevorzugt eines Fahrzeugluftreifens, umfassend die Verfahrensschritte des Verfahrens nach einem der Ansprüche 1 bis 6, sowie zusätzlich umfassend die Verfahrensschritte:

  d) Herstellen eines Fahrzeugreifenrohlings umfassend das Verbundmaterial, und
  e) Vulkanisieren des Fahrzeugreifenrohlings zum Erhalt eines vulkanisierten Fahrzeugreifens.

8. Verstärkungskord für die Verwendung als Festigkeitsträger, insbesondere für die Anwendung als Wulstverstärker, in der Gürtelbandage, im Gürtel und/oder in der Karkasse von Fahrzeugreifen, geeignet für den Einsatz in einem Verfahren nach einem der Ansprüche 1 bis 7, umfassend zumindest ein biobasiertes Polyamidgarn enthaltend biobasiertes Polyamid, wobei das biobasierte Polyamid zumindest teilweise aus den Ausgangsmonomeren

  i) ε-Aminocapronsäure und/oder ε-Caprolactam, oder
  ii) Hexamethylendiamin und Hexamethylendicarbonsäure,

hergestellt ist, wobei die Ausgangsmonomere zumindest teilweise aus Biomasse hergestellt wurden.

9. Verbundmaterial für die Herstellung von Fahrzeugreifen, umfassend:

  x) eine vulkanisierbare Kautschukmischung, und
  y) einen oder mehrere in der vulkanisierbaren Kautschukmischung eingebettete Verstärkungskorde nach Anspruch 8.

10. Fahrzeugreifen, insbesondere Fahrzeugluftreifen, umfassend ein vulkanisiertes Verbundmaterial nach Anspruch 9.

**Claims**

1. Process for producing a composite material for use in the production of vehicle tyres comprising the process steps of:

  a) producing or providing a starting composition comprising as starting monomers:

    i) ε-aminocaproic acid and/or ε-caprolactam and/or

    ii) hexamethylenediamine and hexamethylenedicarboxylic acid,
    wherein the starting monomers present in the starting composition are at least partially produced from biomass based on the amount of substance of the starting monomers present in the starting composition,

  b) polymerizing the starting monomers present in the starting composition to afford a biobased polyamide, forming the biobased polyamide into a biobased polyamide yarn and processing the biobased polyamide yarn into a reinforcing cord and
  c) embedding the reinforcing cord in a vulcanizable rubber mixture to obtain the composite material.

2. Process according to Claim 1, wherein the starting monomers present in the starting composition are produced to an extent of 40% or more from biomass based on the amount of substance of the starting monomers present in the starting composition.

3. Process according to either of Claims 1 or 2, wherein the starting monomers present in the starting composition are at least partially produced from petroleum and/or wherein the starting monomers present in the starting composition are at least partially produced by depolymerization of recycled polyamide.

4. Process according to any of Claims 1 to 3, wherein the biobased polyamide yarn comprises the biobased polyamide in a mass fraction of 40% or more based on the mass of the biobased polyamide yarn.

5. Process according to any of Claims 1 to 4, wherein the biobased polyamide yarn additionally comprises petroleum-based polyamide which is produced from petroleum and/or wherein the biobased polyamide yarn additionally comprises recycled polyamide produced by recycling polyamide-containing products.

6. Process according to any of Claims 1 to 5, wherein the reinforcing cord comprises one or more further yarns composed of materials selected from the group consisting of aramid, polyethylene terephthalate, polyether ketone, polyketone, polyethylene naphthalate, rayon, viscose, carbon fibres, natural fibres, glass fibres and poly(p-phenylene-2,6-benzobisoxazole), preferably selected from the group consisting of aramid and polyethylene terephthalate, particularly preferably selected from the group consisting of biobased polyethylene terephthalate and recycled polyethylene terephthalate.

7. Process for producing a vehicle tyre, preferably a pneumatic vehicle tyre, comprising the process steps of the process according to any of Claims 1 to 6 and additionally comprising the process steps:

d) producing a green vehicle tyre comprising the composite material and
e) vulcanizing the green vehicle tyre to obtain a vulcanized vehicle tyre.

8. Reinforcing cord for use as a strength member, in particular for application as a bead reinforcer, in the belt bandage, in the belt and/or in the carcass of vehicle tyres, suitable for use in a process according to any of Claims 1 to 7 comprising at least one biobased polyamide yarn containing biobased polyamide, wherein the biobased polyamide was at least partially produced from the starting monomers

i) ε-aminocaproic acid and/or ε-caprolactam or
ii) hexamethylenediamine and hexamethylenedicarboxylic acid,
wherein the starting monomers have been at least partially produced from biomass.

9. Composite material for producing vehicle tyres comprising:

x) a vulcanizable rubber mixture and
y) one or more reinforcing cords according to Claim 8 embedded in the vulcanizable rubber mixture.

10. Vehicle tyre, in particular pneumatic vehicle tyre, comprising a vulcanized composite material according to Claim 9.

**Revendications**

1. Procédé de préparation d'un matériau composite destiné à être utilisé lors de la fabrication de pneumatiques pour véhicule, comprenant les étapes de procédé suivantes :

a) préparation ou mise à disposition d'une composition de départ comprenant, en tant que monomères de départ :

i) de l'acide ε-aminocaproïque et/ou de l'ε-caprolactame,
et/ou
ii) de l'hexaméthylènediamine et de l'acide hexaméthylènedicarboxylique,
les monomères de départ contenus dans la composition de départ étant préparés au moins partiellement à partir de biomasse, par rapport à la quantité de matière des monomères de départ contenus dans la composition de départ,

b) polymérisation des monomères de départ contenus dans la composition de départ en un polyamide biosourcé, façonnage du polyamide biosourcé en un fil de polyamide biosourcé et transformation du fil de polyamide biosourcé en une corde de renforcement et
c) incorporation de la corde de renforcement dans un mélange de caoutchouc vulcanisable afin d'obtenir le matériau composite.

2. Procédé selon la revendication 1, les monomères de départ contenus dans la composition de départ étant préparés à raison de 40 % ou plus à partir de biomasse, par rapport à la quantité de matière des monomères de départ contenus dans la composition de départ.

3. Procédé selon l'une des revendications 1 ou 2, les monomères de départ contenus dans la composition de départ étant préparés au moins en partie à partir de pétrole et/ou les monomères de départ contenus dans la composition de départ étant préparés au moins partiellement par dépolymérisation de polyamides recyclés.

4. Procédé selon l'une des revendications 1 à 3, le fil de polyamide biosourcé comprenant le polyamide biosourcé en une proportion massique de 40 % ou plus, par rapport à la masse du fil de polyamide biosourcé.

5. Procédé selon l'une des revendications 1 à 4, le fil de polyamide biosourcé comprenant en plus du polyamide à base de pétrole, qui est préparé à partir de pétrole et/ou le fil de polyamide biosourcé comprenant en outre du polyamide recyclé, qui est préparé par recyclage de produits contenant du polyamide.

6. Procédé selon l'une des revendications 1 à 5, la corde de renforcement comprenant un ou plusieurs autres fils qui sont constitués par des matériaux choisis dans le groupe constitué par l'aramide, le poly(téréphtalate d'éthylène), la polyéthercétone, la polycétone, le poly(naphtalate d'éthylène), la rayonne, la viscose, les fibres de carbone, les fibres naturelles, les fibres de verre et le poly(p-phénylène-2,6-benzobisoxazole), de préférence choisis dans le groupe constitué par l'aramide et le poly(téréphtalate d'éthylène), de manière particulièrement préférée choisis dans le groupe constitué par le poly(téréphtalate d'éthylène) biosourcé et le poly(téréphtalate d'éthylène) recyclé.

7. Procédé de fabrication d'un pneumatique pour véhicule, de préférence d'un pneumatique pour aéronef, comprenant les étapes de procédé du procédé selon l'une des revendications 1 à 6 et comprenant en plus les étapes de procédé :

d) fabrication d'un pneumatique cru pour véhicule comprenant le matériau composite et
e) vulcanisation du pneumatique cru pour véhicule afin d'obtenir un pneu pour véhicule vulcanisé.

8. Corde de renforcement destinée à être utilisée comme support de renforcement, en particulier pour une utilisation comme renforcement de bourrelet, dans la structure de ceinture, dans la ceinture et/ou dans la carcasse de pneumatiques pour véhicule, appropriée pour une utilisation dans un procédé selon l'une des revendications 1 à 7, comprenant au moins un fil de polyamide biosourcé contenant le polyamide biosourcé, le polyamide biosourcé étant préparé au moins partie à partir des monomères de départ

i) de l'acide ε-aminocaproïque et/ou de l'ε-caprolactame ou
ii) de l'hexaméthylènediamine et de l'acide hexaméthylènedicarboxylique,
les monomères de départ ayant été préparés au moins en partie à partir de biomasse.

9. Matériau composite pour la fabrication de pneumatiques pour véhicule, comprenant :

x) un mélange de caoutchouc vulcanisable et
y) une ou plusieurs cordes de renforcement selon la revendication 8 incorporées dans le mélange de caoutchouc vulcanisable.

10. Pneumatique pour véhicule, en particulier pneumatique pour aéronef, comprenant un matériau composite vulcanisé selon la revendication 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012174451 A1
- DE 102018209522 A1
- WO 2014040804 A1
- EP 1757636 A1
- US 9783473 B2
- US 9982094 B2
- US 9988491 B2
- US 10081612 B2
- CN 104277021
- US 4400468 A
- US 8927768 B2
- US 9199961 B2